# EUROPÄISCHE PATENTSCHRIFT

(11) **EP 1 273 846 B1**
(45) Veröffentlichungstag und Bekanntmachung des Hinweises auf die Patenterteilung: **17.01.2007**
(21) Anmeldenummer: 02013124.9
(22) Anmeldetag: 14.06.2002
(51) Int. Cl.: F16M 1/00, B62K 23/04

(54) **Gehäuse für Betätigungseinrichtung**
Casing for operation unit
Boîtier pour dispositif de commande

(30) Priorität: 02.07.2001 DE 10132000
(43) Veröffentlichungstag der Anmeldung: 08.01.2003
(73) Patentinhaber: SRAM Deutschland GmbH, 97404 Schweinfurt (DE)
(72) Erfinder: Blaschke, Georg, 97505 Geldersheim (DE)

(56) Entgegenhaltungen:
- EP-A- 0 388 548
- EP-A- 0 878 383
- DE-A- 19 840 119
- DE-A- 19 922 327
- US-A- 5 845 537

## Beschreibung

Die Erfindung betrifft ein Gehäuse einer Betätigungseinrichtung für ein Fahrradgetriebe, gemäß dem Oberbegriff des Patentanspruchs 1.

Für die manuelle Fernbetätigung von Maschinenelementen, insbesondere für die manuelle Betätigung von Schaltgetrieben, beispielsweise an Fahrrädern, kommen Betätigungseinrichtungen zum Einsatz, die über ein Übertragungselement, insbesondere über einen flexiblen Seilzug, mit dem zu schaltenden Maschinenelement verbunden sind. Sowohl bei Fahrrädern mit Nabengetriebe als auch bei Fahrrädern mit Kettenschaltung kommen zur manuellen Betätigung des Gangwechsels im allgemeinen Betätigungseinrichtungen oder Schalter zum Einsatz, die beispielsweise in Form von Drehgriffschaltern am Fahrradlenker angeordnet sind. Solche Schalter besitzen neben dem eigentlichen, beweglichen Betätigungselement im allgemeinen ein am Fahrradlenker fest montierbares Gehäuse, das einen Mechanismus zur Übertragung der Betätigungsbewegung vom Betätigungselement auf das Übertragungselement, im allgemeinen also auf einen Seilzug, enthält.

Gehäuse der in Rede stehenden Art sind dabei, abgesehen von einer Durchlassöffnung für den Seilzug, sowie abgesehen von einem Durchbruch zur beweglichen Aufnahme des Betätigungselements, im wesentlichen geschlossen, um das Eindringen von Verschmutzungen oder Feuchtigkeit in den im Gehäuse enthaltenen Übertragungsmechanismus zu verhindern. Um den Seilzug, mit dem der Schaltbefehl vom Übertragungsmechanismus des Schalters beispielsweise zum Fahrradgetriebe übertragen wird, in die hierzu vorgesehene Schaltzugaufnahme des Übertragungsmechanismus einführen und ihn dort einhängen zu können, ist am Gehäuse der Betätigungseinrichtung jedoch zumindest eine weitere Öffnung vorzusehen, durch die der Schaltzug mit seinem freien Ende in die Übertragungseinrichtung eingeführt bzw. eingefädelt werden kann, was beispielsweise bei der Erstmontage des Schalters am Fahrrad oder bei einem späteren, verschleißbedingten Austausch des Seilzuges erforderlich werden kann. Diese Seilwechsel- bzw. Montageöffnung muss jedoch nach dem Einführen bzw. Durchfädeln des Seilzugs mittels eines geeigneten Verschlusselements verschlossen werden, um während des Betriebs des Schalters ein Eindringen von Schmutz oder Feuchtigkeit durch die Montageöffnung in den Übertragungsmechanismus der Betätigungseinrichtung zu verhindern.

Aus der DE 199 22 327 A1 ist ein Gehäuse für einen Schalter an einem Fahrrad bekannt, bei dem die Montageöffnung für den Seilzug mittels eines aus gummielastischem Material hergestellten Verschlussglieds verschlossen werden kann. Das Verschlussglied ist dabei mit einem Fortsatz am Gehäuse des Schalters befestigt, um zu verhindern, dass das Verschlussglied verloren geht. Dieses bekannte Verschlussglied weist ferner eine nach Art eines Filmscharniers bzw. Elastomergelenks ausgebildete Gelenkstelle auf, die ein Öffnen und Schließen des am Schaltergehäuse befestigten Verschlussglieds ermöglicht.

Mit anderen Worten bildet das bekannte Verschlussglied ein zusätzliches Einzelteil, das sowohl zusätzliche Werkzeug-, Material- und Produktionskosten als auch zusätzliche Montagekosten verursacht. Da das bekannte Verschlussglied aus Gründen der Beweglichkeit und Elastizität aus einem Elastomermaterial hergestellt werden muss, sowie zusätzlich ein Filmscharnier bzw. Elastomergelenk aufweist, um die Montageöffnung leicht öffnen und verschließen zu können, treten beim Verschließen der Montageöffnung mit dem bekannten Verschlussglied oft Handhabungsschwierigkeiten auf, die einerseits in der geringen Größe solcher Verschlussglieder begründet liegen, insbesondere jedoch mit der aufgrund Material und Gestalt des Verschlussglieds verbundenen ungenauen Positionierung des Verschlussglieds relativ zu den Kanten der Montageöffnung zusammenhängen. Die durch Produktion und Montage des Verschlussglieds zusätzlich anfallenden Kosten und die unzureichende Positioniergenauigkeit bekannter Verschlussglieder sind technisch und wirtschaftlich jedoch nachteilig.

Es ist daher die Aufgabe der vorliegenden Erfindung, ein Gehäuse für eine Betätigungseinrichtung mit einer verschließbaren Montageöffnung zu schaffen, bei dem zusätzliche Werkzeug-, Produktions- und/oder Montagekosten für ein Verschlussglied verringert oder vermieden werden können und bei dem ferner eine exakte Positionierung des Verschlussglieds relativ zum Gehäuse bzw. relativ zur Montageöffnung gewährleistet ist.

Diese Aufgabe wird durch ein Gehäuse nach der Lehre des Patentanspruchs 1 gelöst.

Vorteilhafte Ausführungsformen der Erfindung sind Gegenstand der Unteransprüche.

Das erfindungsgemäße Gehäuse für eine Betätigungseinrichtung insbesondere eines Fahrradgetriebes weist zunächst in an sich bekannter Weise zumindest ein Gehäuseelement sowie eine Montageöffnung auf, die mit einem Verschlussglied abdeckbar bzw. verschließbar ist. Im Unterschied zum Stand der Technik zeichnet sich das erfindungsgemäße Gehäuse jedoch dadurch aus, dass als Verschlussglied nicht ein zusätzlich bereitzustellendes und zu montierendes separates Element benötigt wird, sondern dass das Verschlussglied mit dem zumindest einen Gehäuseelement ein einstückig ausgebildetes Integralelement bildet. Ein dergestalt einstückig mit einem Gehäuseelement ausgebildetes Verschlussglied ist insofern vorteilhaft, als auf diese Weise Gehäuseelement und Verschlussglied in ein und demselben Werkzeug und in ein und demselben Arbeitsgang produziert werden können. Durch den erfindungsgemäß ermöglichten Wegfall eines separat zu produzierenden Verschlussglieds entfällt ferner sowohl die bisher notwendige Montage des Verschlussglieds am Gehäuseelement als auch die dadurch bisher stets vorhandenen, jedoch unerwünschten Toleranzen der Position des Verschlussglieds relativ zum Gehäuseelement bzw. relativ zur Montageöffnung.

Gattungsgemäße Schaltergehäuse bestehen im allgemeinen aus einem Kunststoffmaterial, dessen Formgebung in einem Spritzgussprozess erfolgt. Erfindungsgemäß ist es daher zunächst unwesentlich, welche Form, Kontur oder Wandstärkenverläufe das aus Gehäuseelement und Verschlussglied bestehende Integralelement aufweist. Gemäß einer bevorzugten Ausführungsform ist das Integralelement jedoch im wesentlichen flächig ausgebildet und besitzt daher die Gestalt einer im wesentlichen ebenen Fläche oder einer gekrümmten Raumfläche. Gemäß einer besonders bevorzugten Ausführungsform weist das Integralelement im wesentlichen über seine gesamte Fläche eine im wesentlichen konstante Dikke auf. Ein dergestalt flächig ausgebildetes Integralelement, das darüber hinaus im wesentlichen über seine gesamte Fläche eine im wesentlichen konstante Dikke aufweist, führt insbesondere zu Kostenvorteilen in den Bereichen Werkzeugbau und Produktion und ermöglicht die Einhaltung der vom Kunden erwarteten hohen Oberflächengüte des Bauteils.

Aus welcher Art von Material das Integralelement hergestellt wird, ist erfindungsunwesentlich. In den meisten Fällen wird das Integralelement jedoch aus einem thermoplastischen Kunststoffmaterial bestehen, das sich im Spritzgussverfahren verarbeiten lässt. Gemäß einer bevorzugten Ausführungsform der Erfindung besteht das Integralelement aus einem Material, das zähelastische bis hartgummiartige mechanische Eigenschaften aufweist. Ein aus zähelastischem bis hartgummiartigem Material hergestelltes Integralelement ist vorteilhaft insofern, als auf diese Weise sowohl die an ein Schaltergehäuse gestellten Anforderungen bezüglich Stabilität und Steifigkeit erfüllt werden können, andererseits jedoch eine gewisse Nachgiebigkeit vorhanden ist, die für das Öffnen und Schließen des Verschlussglieds notwendig ist.

Das Öffnen und Schließen des im Bereich der Montageöffnung angeordneten Verschlussglieds, das einen einstückigen Bestandteil des Integralelements darstellt, kann ferner zusätzlich durch eine geeignete Formgebung und Gestaltung des Integralelements in Form eines Biegebereichs erleichtert werden. Welche Form und Gestalt der Biegebereich des Integralelements besitzt, ist erfindungsgemäß zunächst nicht wesentlich. So ist es beispielsweise vorstellbar, dass das Integralelement mit einem Elastomergelenk oder mit einem Filmscharnier ausgestattet wird, wodurch das Abheben des Verschlussglieds von der Montageöffnung erleichtert wird. Gemäß einer besonders bevorzugten Ausführungsform der Erfindung besitzt das Integralelement jedoch nicht das aus dem Stand der Technik bekannte, im wesentlichen linienartig erstreckte Filmscharnier oder Elastomergelenk, sondern weist einen im wesentlichen flächenförmig ausgebildeten Biegebereich auf. Da ein flächenförmig ausgebildeter Biegebereich im Gegensatz zum Filmscharnier oder Elastomergelenk, das linienförmig ist und zudem oft eine extrem geringe Wandstärke aufweist, wesentlich robuster, steifer und belastbarer ist, lässt sich durch ein dergestalt ausgebildetes Integralelement die Lebensdauer, Belastbarkeit und Positioniergenauigkeit des Verschlussglieds im Bereich der Montageöffnung erheblich verbessern.

Gemäß einer weiteren Ausführungsform der Erfindung weist das Integralelement vorzugsweise im Bereich der Montageöffnung ein Rast- oder Schnappelement auf, das mit einer hierzu formkomplementär ausgebildeten Gehäuseausnehmung, die vorzugsweise im Bereich der Montageöffnung angeordnet oder durch die Montageöffnung selbst gebildet wird, in Verriegelungseingriff gebracht werden kann. Mit einem derartigen Rast- oder Schnappelement lässt sich ein unerwünschtes Öffnen des Verschlussglieds, beispielsweise durch Vibrationen oder durch Berührung mit der Hand vermeiden. Vorzugsweise ist dabei das Rast- oder Schnappelement hakenartig oder sägezahnförmig ausgebildet, wobei die Gehäuseausnehmung eine zu diesem hakenartigen oder sägezahnförmigen Rast- bzw. Schnappelement formkomplementäre Hinterschneidung bildet.

Gemäß einer bevorzugten Ausführungsform der Erfindung lässt sich das Rast- oder Schnappelement außer Eingriff und/oder in Eingriff mit der Gehäuseausnehmung bringen, indem das Rast- oder Schnappelement einer Biegeverformung unterworfen wird. Dabei wird die Biegeverformung des Rast- oder Schnappelements beispielsweise dadurch hervorgerufen, dass eine Rastflanke des Rast- oder Schnappelements an einer entsprechenden Rastnase der zum Rast- oder Schnappelement formkomplementären Hinterschneidung abgleitet.

Gemäß einer weiteren Ausführungsform der Erfindung lässt sich das Rast- oder Schnappelement jedoch dadurch außer Eingriff und/oder in Eingriff mit der Hinterschneidung bringen, dass nicht das Rast- oder Schnappelement, sondern vielmehr ein in der Nähe des Rast- oder Schnappelements angeordneter Biegebereich des Integralelements verformt wird. Durch die Einbeziehung eines Biegebereichs des Integralelements lassen sich Steifigkeit und Haltekräfte der Rast- oder Schnappverbindung erhöhen, ohne dass im Bereich des Rast- oder Schnappelements beim Öffnen oder Schließen übermäßig große Materialdehnungen auftreten, die die Lebensdauer der Rast- oder Schnappverbindung beeinträchtigen könnten.

Gemäß einer weiteren Ausführungsform der Erfindung ist es vorgesehen, dass das Integralelement im Bereich der Montageöffnung zumindest eine geringfügige Flächenpressung auf das Gehäuse ausübt. Auf diese Weise lässt sich eine besonders gute Verschluss- und Abdichtungswirkung des das Verschlussglied bildenden Bereichs des Integralelements erreichen, selbst wenn das Integralelement bzw. der das Verschlussglied bildende Bereich des Integralelements nicht eigens mit einer Rast- oder Schnappverbindung zum Verschluss der Montageöffnung ausgestattet ist. Mit anderen Worten bedeutet dies, dass der das Verschlussglied für die Montageöffnung bildende Bereich des Integralelements nach dem Loslassen aufgrund der elastischen Vorspannung des Biegebereichs des Integralelements nicht nur selbsttätig in die Verschlussstellung zurückschnappt oder -springt, sondern dass in der Verschlussstellung eine Restkraft den das Verschlussglied bildenden Teil des Integralelements zusätzlich auf den Rand der Montageöffnung drückt. Dies lässt sich beispielsweise dadurch erzielen, dass der das Verschlussglied bildende Bereich des Integralelements bereits bei der Urformung einen Krümmungsradius erhält, mit dem das Verschlussglied nach der Montage des Schaltergehäuses bereits in seiner Verschlussstellung eine gewisse geringfügige Vorspannung aufweist.

Gemäß einer weiteren Ausführungsform der Erfindung weist das Integralelement an seinem das Verschlussglied bildenden Teil im Bereich der Montageöffnung eine Ausnehmung oder einen Vorsprung auf, der zum Ansatz eines Öffnungswerkzeugs dient. Diese Ausnehmung bzw. dieser Vorsprung ist dabei vorzugsweise so gestaltet, dass sich ein geeignetes Öffnungswerkzeug, das beispielsweise ein Schraubenzieher, eine Münze oder auch ein Fingernagel sein kann, in der Ausnehmung oder an dem Vorsprung angesetzt werden kann und auf diese Weise die Montageöffnung einfach geöffnet werden kann.

Aus wie vielen Einzelteilen das erfindungsgemäße Gehäuse aufgebaut ist, ist prinzipiell nicht erfindungswesentlich. So ist es beispielsweise vorstellbar, dass das Gehäuse im wesentlichen aus lediglich einem einzigen Gehäuseteil besteht, welcher dann gleichzeitig auch das Integralelement bildet und damit auch den das Verschlussglied bildenden Abschnitt des Integralelements einstückig umfasst. Gemäß einer bevorzugten Ausführungsform der Erfindung besitzt das Gehäuse neben dem Integralelement jedoch zumindest ein weiteres Gehäuseelement. Dabei ist das Integralelement mittels einer Steck-, Rast- oder Schnappeinrichtung mit dem weiteren Gehäuseelement verbindbar. In einem solchen Fall kann das zumindest eine weitere Gehäuseelement insbesondere aus einem beispielsweise besonders steifen oder schlagzähen Werkstoff hergestellt werden, wohingegen das lediglich einen Teil des Gehäuses sowie das Verschlussglied bildende Integralelement aus einem vorzugsweise zähelastischen bis hartgummiartigen Material gefertigt werden kann, was insbesondere den Anforderungen an das Verschlussglied entgegenkommt. Vorzugsweise ist dabei die Steck-, Rast- oder Schnappeinrichtung, mit der das Integralelement mit dem weiteren Gehäuseelement verbunden werden kann, lösbar ausgebildet. Dadurch lässt sich das Integralelement bei Bedarf vollständig von dem weiteren Gehäuseelement trennen, was beispielsweise dann von Vorteil sein kann, wenn für eine Reparatur oder zum Abschmieren des Übertragungsmechanismus der Betätigungseinrichtung der Zugang zum Betätigungsmechanismus erforderlich wird.

Im folgenden wird die Erfindung anhand einer lediglich ein Ausführungsbeispiel darstellender Zeichnung näher erläutert. Es zeigt die einzige
- Fig.: in schematischer Darstellung den Querschnitt durch ein Gehäuse einer Betätigungseinrichtung.

Das in der Fig. dargestellte Gehäuse einer Betätigungseinrichtung für ein Fahrradgetriebe besteht im wesentlichen aus zwei Kunststoffelementen, nämlich aus einem Gehäuseelement 1, sowie einem ebenfalls ein Gehäuseelement bildenden Integralelement 2. Das Gehäuseelement 1 kann beispielsweise aus einem harten, jedoch schlagzähen Kunststoffmaterial bestehen und übernimmt im wesentlichen die tragenden Gehäusefunktionen, wohingegen das Integralelement 2 vorzugsweise aus einem Werkstoff mit zähelastischen bis hartgummiartigen Eigenschaften besteht. Das dargestellte Integralelement 2 kann sich dabei insbesondere auch (aus der Zeichenebene heraus) über größere Bereiche des Schaltergehäuses erstrecken, bzw. es können größere Bereiche des Schaltergehäuses durch das Integralelement 2 gebildet werden.

Zum Wechsel des Bowdenzugs besitzt das Gehäuseelement 1 eine Seilzugwechsel- bzw. Montageöffnung 3, die normalerweise durch den das Verschlussglied bildenden Verschlussbereich 4 des Integralelements 2 abgedeckt bzw. verschlossen ist. Im Sinne eines sicheren und dichten Abschlusses der Montageöffnung 3 während des normalen Betriebs des Schalters besitzt der das Verschlussglied bildende Verschlussbereich 4 des Integralelements 2 ein hakenartiges Rastelement 5, das mit einer Kante der Montageöffnung 3 in verschließenden Eingriff gebracht werden kann. Zusätzlich oder aber auch alternativ zu einem Rast- oder Schnappelement 5 kann der Verschlussbereich 4 des Integralelements 2 im Bereich der Montageöffnung 3 auch eine gewisse Flächenpressung auf das Gehäuseelement 1 ausüben. Die Flächenpressung kann beispielsweise dadurch erzeugt werden, dass der Verschlussbereich 4 des Integralelements 2 bei der Urformung des Integralelements 2 einen kleineren Krümmungsradius erhält als dies dem Außendurchmesser des Gehäuseelements 1 entspricht.

Im Unterschied zu den aus dem Stand der Technik bekannten Verschlussgliedern für Schaltergehäuse, die entweder mittels einer biegeschlaffen Verliersicherung oder mittels Folienscharnier bzw. Elastomergelenk mit dem Schaltergehäuse beweglich verbunden sind, weist das Integralelement 2 des Schaltergehäuses einen im wesentlichen flächig ausgedehnten Biegebereich 6 auf, der den Vorteil leichter Biegebeweglichkeit zusätzlich mit einer hohen Dauerfestigkeit sowie insbesondere mit einer besonders exakten Positionierung des das Verschlussglied bildenden Verschlussbereichs 4 verbindet. Dies bedeutet mit anderen Worten, dass beim Öffnen der Montageöffnung 3 bzw. beim Abheben des Verschlussbereichs 4 von der Montageöffnung 3 der gesamte Biegebereich 6 eine elastische Biegeverformung erfährt, die bei geeigneter Dimensionierung zu einem einfachen, selbsttätigen Wiederverschließen der Montageöffnung durch elastische Rückverformung des Biegebereichs 6 führt.

Das Integralelement 2 ist mit dem weiteren Gehäuseelement 1 im dargestellten Ausführungsbeispiel mittels einer lediglich schematisch angedeuteten Steck-, Rast- oder Schnappeinrichtung 7 verbunden, deren Fügerichtung insbesondere auch senkrecht zur Zeichenebene verlaufen kann. Die Steck-, Rast- oder Schnappeinrichtung 7 kann dabei lösbar ausgeführt sein, so dass das Integralelement 2, beispielsweise zu Wartungszwecken des im Schaltergehäuse untergebrachten, nicht dargestellten Schaltermechanismus, komplett abgenommen werden kann.

Im Ergebnis wird deutlich, dass mit einem Schaltergehäuse, bei dem Gehäuse- und Verschlussfunktionen in einem einzigen Integralelement vereinigt sind, sowohl Vorteile bezüglich Montage, Wartung und Betriebssicherheit als auch in Form von Kosteneinsparungen bei der Produktion der Einzelteile ermöglicht werden.

### Bezugszeichenliste

- 1.: Gehäuseelement
- 2.: Integralelement
- 3.: Montageöffnung
- 4.: Verschlussbereich
- 5.: Rastelement
- 6.: Biegebereich
- 7.: Steckverbindung

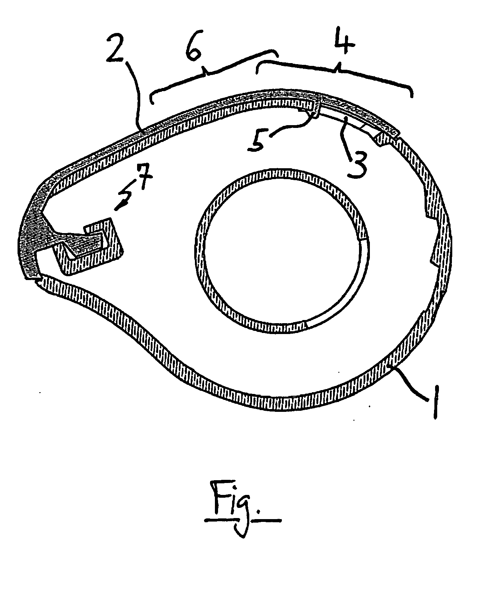

## Patentansprüche

1. Gehäuse einer Betätigungseinrichtung für ein Fahrradgetriebe, bestehend aus mehreren Gehäuseelementen und einer Montageöffnung (3), die mit einem Verschlussglied abgedeckt wird, wobei
das Verschlussglied mit einem der Gehäuseelemente ein einstückiges Integralelement (2) bildet, in dem die Gehäuse- und Verschlussfunktionen in einem einzigen Bauteil vereint werden, wobei das Integralelement (2) über einen flächigen Biege- (6) und Verschlussbereich (4) verfügt und mit einem Ende mit einem weiteren Gehäuseelement (1) verbunden ist, **dadurch gekennzeichnet, dass** sich das Integralelement (2) über einen äußeren Bereich dieses Gehäuseelementes (1) erstreckt und mit dem anderen Ende die Montageöffnung (3) überdeckt.

2. Gehäuse nach Anspruch 1,
**dadurch gekennzeichnet,**
**dass** das Integralelement (2) über seine gesamte Fläche eine im wesentlichen konstante Dicke aufweist und über einen flächigen Biegebereich (6) zwischen der Anlenkung am Gehäuseelement (1) und dem Verschlussbereich (4) verfügt.

3. Gehäuse nach Anspruch 2,
**dadurch gekennzeichnet,**
**dass** das Integralelement (2) flächig nach Art einer ebenen Fläche oder einer Raumfläche ausgebildet ist, aus einem Werkstoff mit zähelastischen bis hartgummiartigen mechanischen Eigenschaften besteht und sich zum Verschließen der Montageöffnung (3) an die Kontur des Gehäuseelementes (1) anschmiegt.

4. Gehäuse nach einem der Ansprüche 1 bis 3,
**dadurch gekennzeichnet,**
**dass** das Integralelement (2) im Biegebereich (6) in Richtung des Gehäuseelementes (1) vorgespannt ist, wodurch ein selbsttätiges Zurückschnappen des Integralelementes (2) in die Verschlussstellung ermöglicht wird.

5. Gehäuse nach einem der Ansprüche 1 bis 4,
**dadurch gekennzeichnet,**
**dass** der Biegebereich (6) im verschlossenen Zustand, wenn das Integralelement (2) die Montageöffnung (3) abdeckt, unter elastischer Vorspannung steht, die eine Abdichtkraft bzw. Flächenpressung auf das Gehäuseelement (1) ausübt.

6. Gehäuse nach Anspruch 1,
**dadurch gekennzeichnet,**
**dass** der Verschlussbereich (4) des Integralelementes (2) bereits bei der Urformung einen Krümmungsradius erhält, damit das Integralelement (2) in seiner Verschlussstellung eine Vorspannung aufweist.

7. Gehäuse nach Anspruch 1,
**dadurch gekennzeichnet,**
**dass** das Integralelement (2) vorzugsweise im Bereich der Montageöffnung (3) ein Rast- oder Schnappelement (5) aufweist, das mit einer formkomplementär ausgebildeten Ausnehmung an der Montageöffnung (3) in Verriegelungseingriff gebracht wird.

8. Gehäuse nach Anspruch 7,
**dadurch gekennzeichnet,**
**dass** das Rast- oder Schnappelement (5) hakenartig oder sägezahnförmig ausgebildet ist und die Montageöffnung (3) eine zum Rast- oder Schnappelement (5) formkomplementäre Hinterschneidung bildet.

9. Gehäuse nach Anspruch 8,
**dadurch gekennzeichnet,**
**dass** das Rast- oder Schnappelement (5) durch Verformung eines Biegebereichs (6) des Integralelements (2) außer Eingriff und/oder in Eingriff mit der Hinterschneidung der Montageöffnung (3) gebracht wird.

10. Gehäuse nach Anspruch 9,
**dadurch gekennzeichnet,**
**dass** die Biegeverformung des Rast- oder Schnappelements (5) durch Gleiten einer Rastflanke des Rast- oder Schnappelements (5) entlang einer Rastnase der Hinterschneidung verursacht wird.

11. Gehäuse nach Anspruch 6,
**dadurch gekennzeichnet,**
**dass** das Integralelement (2) im Bereich der Montageöffnung (3) aufgrund seiner, von der entsprechenden Gehäusekontur deutlich abweichenden Kontur eine Flächenpressung auf das Gehäuseelement (1) ausübt.

12. Gehäuse nach Anspruch 6,
**dadurch gekennzeichnet,**
**dass** das Integralelement (2) vorzugsweise im Bereich der Montageöffnung (3) eine Ausnehmung oder einen Vorsprung zum Ansatz eines Öffnungswerkzeugs aufweist.

13. Gehäuse nach Anspruch 1,
**dadurch gekennzeichnet,**
**dass** das Integral element (2) nicht einstückig mit dem Gehäuseelement (1) verbunden ist, wobei das vom Verschlussbereich (4) weiter entfernte Ende des Integralelementes (2) mit einer Steck-, Rast- oder Schnappverbindung (7) ausgestattet ist, um eine nicht lösbare Verbindung in dem Zustand zu gewährleisten, wenn das Integralelement (2) am Gehäuseelement (1) anliegt.

14. Gehäuse nach Anspruch 13,
**dadurch gekennzeichnet, dass** das Integralelement (2) über eine Steck-, Rast- oder Schnappverbindung (7) mit dem Gehäuseelement (1) verbunden ist und nach dem Lösen des Verschlussbereiches (4) von der Montageöffnung (3) komplett und ohne Werkzeug vom Gehäuseelement (1) abgenommen werden kann.

15. Gehäuse nach Anspruch 1,
**dadurch gekennzeichnet,**
**dass** sich das Integralelement (2) über größere Bereiche des Gehäuses erstreckt bzw. selbst größere Bereiche des Gehäuses bildet.

## Claims

1. Housing of an actuating device of a bicycle gearing, consisting of a plurality of housing elements and an installation opening (3) which is covered by a closure member, the closure member forming, with one of the housing elements, a one-piece integral element (2) in which the housing and closure functions are combined in a single component, the integral element (2) including planar bending (6) and closure (4) zones and being connected by one end to a further housing element (1), **characterized in that** the integral element (2) extends over an external region of said housing element (1) and, at its other end, covers the installation opening (3).

2. Housing according to claim 1, **characterized in that** the integral element (2) has a substantially constant thickness over its entire area and includes a planar bending zone (6) between its articulation to the housing element (1) and the closure zone (4).

3. Housing according to claim 2, **characterized in that** the integral element (2) has a planar configuration in the manner of a flat surface or a three-dimensional surface, is made of a material having viscoplastic to hard-rubber-like mechanical properties and snugly fits the contour of the housing element (1) in order to close off the installation opening (3).

4. Housing according to any one of claims 1 to 3, **characterized in that** the integral element (2) is preloaded in the bending zone (6) in the direction of the housing element (1), making it possible for the integral element (2) to automatically snap back into the closed position.

5. Housing according to any one of claims 1 to 4, **characterized in that** in the closed state, when the integral element (2) covers the installation opening (3), the bending zone (6) is under an elastic preload which exerts a sealing force or surface pressure against the housing element (1).

6. Housing according to claim 1, **characterized in that** a radius of curvature is imparted to the closure zone (4) of the integral element (2) at the primary forming stage, so that the integral element (2) has a preload in its closed position.

7. Housing according to claim 1, **characterized in that** the integral element (2) includes, preferably in the region of the installation opening (3), a latching or snap-fitting element (5) which is brought into locking engagement with a recess of complementary shape in the installation opening (3).

8. Housing according to claim 7, **characterized in that** the latching or snap-fitting element (5) has a hook-like or saw-toothed configuration and the installation opening (3) includes an undercut of complementary shape to the latching or snap-fitting element (5).

9. Housing according to claim 8, **characterized in that** the latching or snap-fitting element (5) is moved out of engagement and/or into engagement with the undercut of the installation opening (3) through deformation of a bending zone (6) of the integral element (2).

10. Housing according to claim 9, **characterized in that** the bending deformation of the latching or snap-fitting element (5) is caused by a latching flank of the latching or snap-fitting element (5) sliding along a latching projection of the undercut.

11. Housing according to claim 6, **characterized in that** the integral element (2), as a result of its contour significantly deviating from the corresponding contour of the housing, exerts a planar pressure on the housing element (1) in the region of the installation opening (3).

12. Housing according to claim 6, **characterized in that** the integral element (2) has a recess or projection for engagement with an opening tool preferably in the region of the installation opening (3).

13. Housing according to claim 1, **characterized in that** the integral element (2) is not connected in one piece with the housing element (1), at that end of the integral element (2) which is further from the closure zone (4) being equipped with a plug-in, latching or snap-in connection (7) in order to ensure a non-detachable connection in the state when the integral element (2) rests against the housing element (1).

14. Housing according to claim 13, **characterized in that** the integral element (2) is connected to the housing element (1) by means of a plug-in, latching or snap-in connection (7) and can be removed completely and without the use of a tool from the housing element (1) after the closure zone (4) has been released from the installation opening (3).

15. Housing according to claim 1, **characterized in that** the integral element (2) extends over relatively large areas of the housing or itself forms relatively large areas of the housing.

## Revendications

1. Boîtier d'un dispositif de commande pour un changement de vitesse de bicyclette, se composant de plusieurs éléments de boîtier et d'une ouverture de montage (3), qui est masquée par un organe de fermeture, dans lequel l'organe de fermeture forme avec un des éléments de boîtier un élément intégral d'une seule pièce (2), dans lequel les fonctions de boîtier et de fermeture sont réunies dans un seul composant, dans lequel l'élément intégral (2) comporte une zone plate de flexion (6) et de fermeture (4) et est relié par une extrémité à un autre élément de boîtier (1), **caractérisé en ce que** l'élément intégral (2) s'étend sur une zone extérieure de cet élément de boîtier (1) et masque par son autre extrémité l'ouverture de montage (3).

2. Boîtier selon la revendication 1, **caractérisé en ce que** l'élément intégral (2) présente une épaisseur sensiblement constante sur toute sa surface et comporte une zone de flexion plate (6) entre l'articulation sur l'élément de boîtier (1) et la zone de fermeture (4).

3. Boîtier selon la revendication 2, **caractérisé en ce que** l'élément intégral (2) est réalisé à plat à la manière d'une surface plane ou d'une surface spatiale, se compose d'un matériau avec des propriétés mécaniques viscoélastiques à caoutchouteuses dures et épouse le contour de l'élément de boîtier (1) pour fermer l'ouverture de montage (3).

4. Boîtier selon l'une quelconque des revendications 1 à 3, **caractérisé en ce que** l'élément intégral (2) est précontraint dans la zone de flexion (6) en direction de l'élément de boîtier (1), ce qui permet un retour d'encliquetage automatique de l'élément intégral (2) dans la position de fermeture.

5. Boîtier selon l'une quelconque des revendications 1 à 4, **caractérisé en ce que** la zone de flexion (6) se trouve, à l'état fermé, lorsque l'élément intégral (2) masque l'ouverture de montage (3), sous une précontrainte élastique qui exerce une force d'étanchéité ou une pression de surface sur l'élément de boîtier (1).

6. Boîtier selon la revendication 1, **caractérisé en ce que** la zone de fermeture (4) de l'élément intégral (2) reçoit déjà un rayon de courbure lors du formage initial, afin que l'élément intégral (2) présente une précontrainte dans sa position de fermeture.

7. Boîtier selon la revendication 1, **caractérisé en ce que** l'élément intégral (2) présente, de préférence dans la région de l'ouverture de montage (3), un élément d'encliquetage ou d'accrochage (5), qui est amené en position de verrouillage avec un évidement de forme complémentaire sur l'ouverture de montage (3).

8. Boîtier selon la revendication 7, **caractérisé en ce que** l'élément d'encliquetage ou d'accrochage (5) est réalisé en forme de crochet ou de dent de scie et l'ouverture de montage (3) forme une contre-dépouille de forme complémentaire à l'élément d'encliquetage ou d'accrochage (5).

9. Boîtier selon la revendication 8, **caractérisé en ce que** l'élément d'encliquetage ou d'accrochage (5) est amené hors prise et/ou en prise avec la contre-dépouille de l'ouverture de montage (3) par déformation d'une zone de flexion (6) de l'élément intégral (2).

10. Boîtier selon la revendication 9, **caractérisé en ce que** la déformation de flexion de l'élément d'encliquetage ou d'accrochage (5) est provoquée par glissement d'un flanc d'encliquetage de l'élément d'encliquetage ou d'accrochage (5) le long d'un ergot d'encliquetage de la contre-dépouille.

11. Boîtier selon la revendication 6, **caractérisé en ce que** l'élément intégral (2) exerce une pression de surface sur l'élément de boîtier (1) dans la région de l'ouverture de montage (3), en raison de son contour s'écartant nettement du contour correspondant du boîtier.

12. Boîtier selon la revendication 6, **caractérisé en ce que** l'élément intégral (2) présente, de préférence dans la région de l'ouverture de montage (3), un évidement ou une saillie pour appliquer un outil d'ouverture.

13. Boîtier selon la revendication 1, **caractérisé en ce que** l'élément intégral (2) n'est pas assemblé en une seule pièce à l'élément de boîtier (1), dans lequel l'extrémité de l'élément intégral (2) plus éloignée de la zone de fermeture (4) est pourvue d'un assemblage à fiche, par encliquetage ou par accrochage (7), afin de garantir un assemblage inséparable dans l'état où l'élément intégral (2) est appliqué sur l'élément de boîtier (1).

14. Boîtier selon la revendication 13, **caractérisé en ce que** l'élément intégral (2) est assemblé à l'élément de boîtier (1) par un assemblage à fiche, par encliquetage ou par accrochage (7) et peut être enlevé entièrement et sans outil de l'élément de boîtier (1) après la séparation de la zone de fermeture (4) et de l'ouverture de montage (3).

15. Boîtier selon la revendication 1, **caractérisé en ce que** l'élément intégral (2) s'étend sur de grandes zones du boîtier ou forme lui-même de grandes zones du boîtier.
